# EUROPEAN PATENT SPECIFICATION

(11) **EP 2 130 878 B1**
(45) Date of publication and mention of the grant of the patent: **20.04.2011**
(21) Application number: 08425399.6
(22) Date of filing: 05.06.2008
(51) Int. Cl.: C09D 7/12, C09D 7/00, C09D 5/00

(54) **Double layer coating, its preparation and its use for rendering ultra water-repellent and antireflective the surfaces to which it is applied**
Doppelbeschichtung, deren Herstellung und deren Verwendung zum Aufbringen von stark wasserabweisenden und nichtreflektierenden Schichten auf Oberflächen
Revêtement bicouche, sa préparation et son utilisation pour rendre des surfaces hydrophobes et anti-réfléchissantes

(43) Date of publication of application: 09.12.2009
(73) Proprietor: iGUZZINI ILLUMINAZIONE S.p.A., 62019 Recanati-Macerata (IT)
(72) Inventor: Manca, Michele, 73048 Nardo (IT); De Marco, Luisa, 73042 Casarano (IT); Gigli, Giuseppe, 00167 Roma (IT)
(74) Representative: Gervasi, Gemma

(56) References cited:
- DE-A1- 10 106 213
- US-A1- 2007 141 305
- GU G ET AL: "Fabrication and characterization of transparent superhydrophobic thin films based on silica nanoparticles" APPLIED PHYSICS A; MATERIALS SCIENCE & PROCESSING, SPRINGER, BERLIN, DE, vol. 83, no. 1, 1 April 2006 (2006-04-01), pages 131-132, XP019337220 ISSN: 1432-0630

## Description

### FIELD OF THE INVENTION

The present invention relates to the field of surface coatings, and in particular to coatings applied for the purpose of suitably modifying certain surface properties of any material while maintaining unaltered the bulk properties of the material itself.

### STATE OF THE ART

The so-called "Lotus effect" has long been known and, as it is also known, refers to the surface characteristics of the leaves of the lotus plant, which exhibit a particular water-repellency due both to the waxy material with which they are covered and to their particular morphology which reveals the presence of protuberances of micrometric scale, from each of which emerge filiform structures of nanometric size. Thanks to these characteristics the surface of lotus leaves is strongly water-repellent; water droplets which come into contact therewith, rather than depositing on and wetting the surface, remain approximately spherical then roll off taking with them any traces of dirt deposited on the surface.

From the first studies, dating back to the late 1990's, a considerable amount of research has been undertaken in this field, aimed at developing materials and manufacturing techniques able to reproduce the Lotus effect on a variety of surface types. Currently, however, many of the solutions which have been developed and which constitute the state of the art entail the use of complex procedures which are hard to implement on an industrial scale. In particular, some of the approaches which have so far been followed are based on the use of techniques such as plasma treatment, vapour phase chemical deposition, electrodeposition, micro- and nano-replication from micro- and nano-structured moulds.

Additionally, in most cases (mainly when dealing with glass surfaces) it is required not to reduce surface transparency, but rather, if possible, to increase it by water-repellent treatment. However, as is known, in order to obtain surfaces with a contact angle greater than 150° (superhydrophobic surfaces) it is essential to modify the topology of the surfaces by highly roughening them. This often entails opacification of surfaces and loss of transparency.

By virtue of these considerations some approaches have recently been proposed based on depositing films of organic and inorganic materials starting from solutions containing microparticles dispersed in suitable solvents.

For example EP1479738A1 describes a hydrophobic coating formed from a mixture containing inorganic microparticles functionalized by fluorinated acrylate groups. But the results obtained in terms of contact angle, duration of effect, transparency and cost of materials do not enable them to be applied on an industrial scale.

In 2007, Bravo et al (Transparent Superhydrophobic Films Based on Silica Nanoparticles, Langmuir 23:7293-7298) reported a transparent superhydrophobic coating obtained by means of a large number of substrate immersions into solutions containing SiO₂ microparticles of various sizes which serve to produce the desired morphology, followed by functionalization with a fluorinated reagent which serves to modify its chemical properties. However this method is also inconvenient due to the excessive costs of the fluorinated reagent and its poor chemical stability.

In the light of the limitations shown by the treatments of the known art, the need to identify a coating able to simultaneously satisfy the following requirements is evident: 1) ultra water-repellence 2) high transparency 3) ease of application 4) long durability 5) low costs.

### Summary of the invention

The present invention relates to a double layer coating formed of a first layer (lower layer) of photo/thermosetting resin and a second later (upper layer) comprising hydrophobic microparticles partially incorporated in a resin matrix. The application of said coating is an effective method for generating ultra water-repellent and antireflective surfaces.

### Brief description of the figures

Fig. 1 shows schematically the structure of a double layer coating of the invention.
Fig. 2 shows the SEM imagine of the surface morphology of a double layer coating of the invention.
Fig. 3 shows schematically the behaviour of a light ray incident on an untreated glass surface (a) and on a glass surface treated with the double layer coating of the invention (b).
Fig. 4. shows the schematic representation of a hydrophobic microparticle functionalized with -Si(CH₃)₃ groups
Fig. 5 shows the transmittance spectrum in the case of an untreated glass (dotted curve) and in the case of a glass surface with the double layer coating of the invention (continuous curve).

### Detailed description of the invention

The present invention enables the aforesaid drawbacks to be overcome by virtue of a double layer coating able to render extremely water-repellent the surface to which it is applied, and at the same time, reduce the amount of light reflected therefrom.

The coating of the present invention comprises a first resin layer which adheres perfectly to the substrate (lower layer) and a second layer superimposed thereto (upper layer) which comprises the hydrophobic microparticles fixed by the addition of said resin in which at least a part of said microparticles of the upper layer are at least partially incorporated in the lower layer.

The first layer (or lower layer) is formed by a photo/thermosetting resin consisting of a silicon based polymer (i.e. containing a Si-O-Si group in the polymer chain). In particular polyvinylsiloxane, polydimethylsiloxane, polydiphenylsiloxane, polyphenylmethylsiloxane and polyvinylmethoxysilane can be used.

According to an alternative formulation of the present invention, the first layer (or lower layer) is formed by an epoxy resin or polyurethane resin, and more generally by a wide range of polymer materials. For example polymethylmethacrylate, polycarbonate, polystyrene, polyethylene, polypropylene, cellulose-based polymers, etc.

According to a further alternative formulation of the present invention the first layer (or lower layer) is formed by using an organic/inorganic hybrid copolymer obtained by sol-gel method, for example an Ormocer^{®} material.

The second layer (or upper layer) comprises hydrophobic microparticles of diameter between 5 nm and 5 µm, preferably between 5 nm and 100 nm. Said microparticles consist of an inorganic core and an organic shell grafted onto the inorganic core. The inorganic core preferably consists of silica or of a wide range of metal oxides in general (titanium oxide, aluminium oxide, zirconia, etc.).

The grafted organic shell comprises functional groups of general formula -SiR₃ where each R substituent (independent of the others) can be a hydrogen, a linear or branched C₁-C₃₀ alkyl chain, a linear or branched C₂-C₃₀ unsaturated alkyl chain, a linear or branched halogen-substituted C₁-C₃₀ alkyl chain, a vinyl chain, a C₆-C₁₈ aromatic group, a C₃-C₃₀ epoxy-alkyl chain, a linear or branched chain of structure CₘH₂ₘX where m=1-30, X is a CN, or NR" or SR" or OR" or O-C(O)-R" or CO₂R" or N-C(O)-R" group, where R" can be: a hydrogen, a linear or branched C₁-C₃₀ alkyl chain, a linear or branched C₂-C₃₀ unsaturated alkyl chain, a linear or branched halogen-substituted C₁-C₃₀ alkyl chain, a vinyl chain, a C₆-C₁₈ aromatic group, a C₃-C₃₀ epoxy-alkyl chain, a C₁-C₃₀ acyl group, an unsaturated C₃-C₃₀ acyl group, a C₆-C₁₈ aromatic group.

The microparticles functionalized as aforedescribed are known and can be prepared according to one of the methods of the known art, for example by suspending and maintaining the metal oxide microparticles under agitation in a suitable organic solvent and mixing them with the preselected functionalizing agent under suitable temperature and pressure conditions. The functionalised particles are then collected by centrifugation, washed with a suitable solvent and dried.

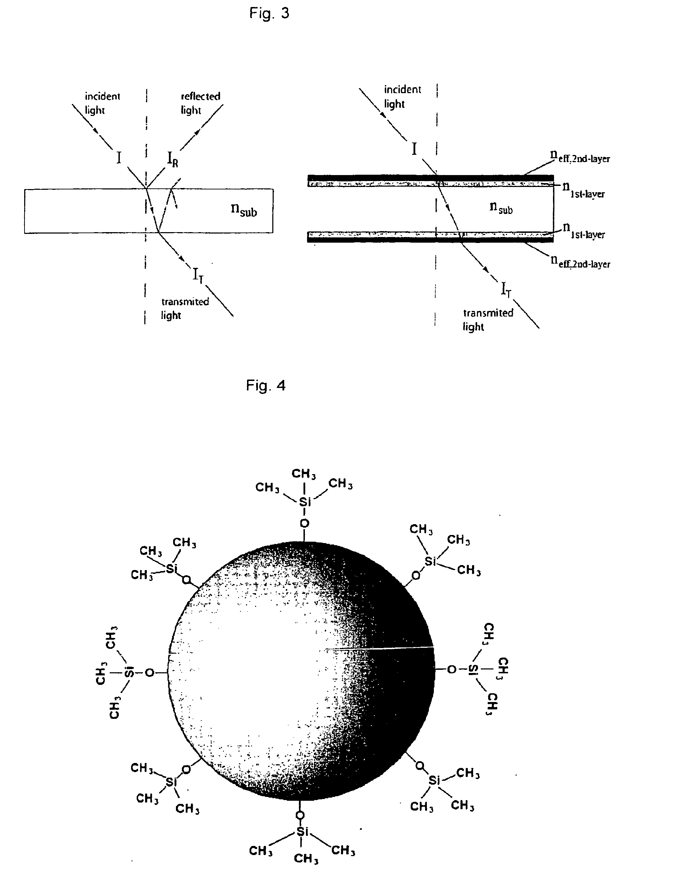

A schematic representation of a particle functionalized as aforedescribed is given in Fig 4. In this case all three substituent groups R are identified as methyl groups -CH₃.

The treatment of any surface by applying the coating of the present invention consists of depositing a first layer of photo/thermosetting resin (lower layer) followed by a second layer (upper layer) comprising the hydrophobic microparticles.

The first layer (or lower layer) is formed by a photo/thermosetting resin and is obtained starting from a solution consisting of a suitable solvent in which a suitable crosslinking agent and possibly suitable additives are dissolved, in addition to the constituent polymer of the resin. The resin film just deposited on the substrate appears in the gel state.

A suspension is hence deposited onto the first layer of resin in the gel state, consisting of the microparticles functionalized as aforedescribed suspended in a highly volatile solvent to which a certain quantity of photo/thermosetting resin is added, preferably of the same type as that used as the first layer, and a suitable crosslinking agent. The weight ratio of microparticles/resin in the second layer is comprised between 0.1 and 10, but preferably between 0.5 and 2.

The second layer (upper layer) containing the hydrophobic microparticles can be obtained by a single deposition, or can alternatively be obtained by successive depositions of the same starting solution or solutions of different compositions. That is to say of solutions consisting of: particles functionalized in a different manner, or functionalized in the same manner but present in different concentrations; resins consisting of a different material, or consisting of the same material but present in different concentrations; different solvents.

Following deposition of the first layer (lower layer) and the second layer (upper layer) the surface is irradiated with UV light and/or heated to a temperature comprised between 120ºC and 250ºC so as to initiate crosslinking of the resin polymer chains, allowing evaporation of the residual solvent. In this manner hardening of the coating and its adhesion to the substrate is achieved. By virtue of the resin crosslinking process, the microparticles present in the upper layer are stably fixed to the resin matrix in which they are dispersed and as this latter is simultaneously covalently bound to the lower layer resin by the curing effect, the coating can be likened to a single continuous layer of resin with the hydrophobic microparticles incorporated in its surface.

Following the aforedescribed process, the microparticles adjacent to the first resin layer (lower layer) are found to be at least partially incorporated therein while the microparticles not immersed in the first layer become variously aggregated and are at least partially held together by the resin matrix in which they have been dispersed.

Both the coating layers can be deposited onto the surface preferably by dip-coating, but several deposition procedures, such as spin-coating, spray-coating or screen printing, can also be used.

According to a particular embodiment of the present invention the lower layer is applied by dip-coating, while the upper layer is applied by spray-coating.

The hydrophobic character of the microparticles functionalized with -SiR₃ groups is enhanced by the particular morphology achieved by depositing the film which contains them. The high level of roughness and the nanoporous structure lead to a considerable increase in surface area with formation of a composite interface where water droplets cannot penetrate into the microcavities arising from microparticle aggregation, and quasi-spherical droplets form which roll off even where a very small inclination angle is present. It results that the surface exhibits an exceptional water-repellence which can be quantified from measuring the contact angle, the value of which in general is greater than 160º.

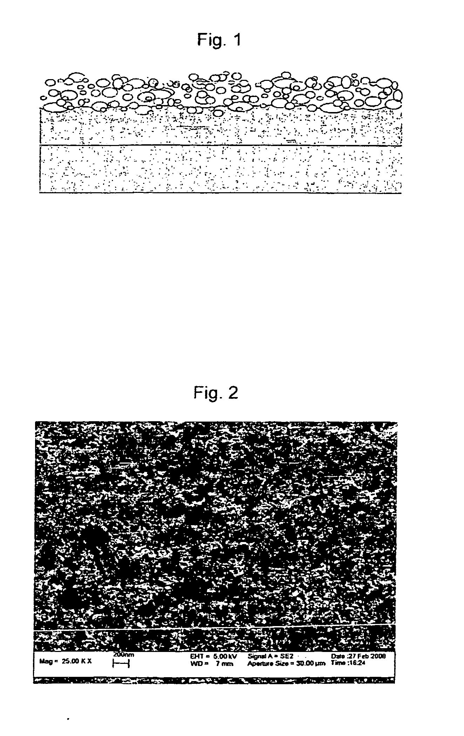

Fig. 2 is an SEM image showing the morphology of a surface on which the double layer coating of the present invention was deposited.

The double layer coating of the present invention can be applied with extreme versatility to a wide range of objects and surfaces.

Furthermore, according to a further preferred embodiment of the present invention, the lower layer presents a refractive index n_{1st-layer} lower than the refractive index of the substrate n_{sub} and the microparticles are arranged in such a manner that the upper layer presents a nanoporous structure in which the mean diameter of said pores is less than 150 nm and pore distribution is homogeneous. In said configuration the "effective" refractive index n_{eff,2nd-layer} of the upper nanoporous layer is found to be lower than the refractive index n_{1st-layer} of the lower layer. In other words the relationship is as follows:
*n_{sub}* ≥ *n_{1st-layer}* ≥ *n_{eff,2nd-layer}*

The value of the effective refractive index of the upper layer is related to the film porosity and is determined by the particular surface texture created by the microparticles. Said texture causes a more favourable traversing of the light rays incident on the coating surface with non-zero incident angles and consequently reduces the light component reflected from the surface according to the scheme given in Fig 3.

Therefore, in accordance with said preferred embodiment the double layer coating acts as an antireflective coating.

For the specific embodiment of the invention as aforedescribed for forming the lower layer, resins are used which have a refractive index comprised between 1.4 and 1.6, in particular between 1.4 and 1.49, while the effective refractive index of the upper layer including the microparticles is comprised between 1.25 and 1.45, in particular between 1.25 and 1.35.

Finally all the properties (hydrophobicity, mechanical resistance, optical transparency) of the coating of the present invention can be effectively controlled by suitably selecting the type and dimensions of the microparticles, their functionalization, the type of resin, its relative concentration, and the various steps of the deposition process.

Some embodiments are given hereinafter to provide a more complete understanding of the invention.

### Example 1

### Functionalization of the microparticles by means of -Si(CH₃)₃ groups

A suspension containing 5 wt% of silica powder with a specific surface area equal to 150m²/g (CAS No. 7631-86-9) in 2-pentanone (CAS No. 107-87-9) is maintained under agitation for 24 hours and then mixed with a quantity of hexamethyldisilazane (CAS No. 999-97-3) in a volumetric ratio of 1:2. The mixture is heated to 60ºC and maintained under agitation for 24 hours in a nitrogen atmosphere. The microparticles are then centrifuged, the supernatant is discarded, 2 washes with diethylether (CAS No. 60-29-7) are carried out and the product is dried at 150ºC for 5 minutes. The surfaces of the particles thus obtained are covered with polar end groups -Si(CH₃)₃ which determine their hydrophobic character.

### Example 2

### Formation of the ultra water-repellent coating of the invention

A first later of epoxy resin (CAS No. 28906-96-9), containing as the crosslinking agent triarylsulfonium/ hexafluoroantimonate salt, (CAS No. 89452-37-9; 71449-78-0) having a thickness of 250 nm, is deposited onto a glass substrate. On this first noncrosslinked (uncured) resin a second layer is deposited, starting from a solution of 2-pentanone (CAS No. 107-87-9) containing 7.1 wt% of epoxy resin with triarylsulfonium/ hexafluoroantimonate salt, and 4.8 wt% of silica microparticles functionalized with -Si(CH₃)₃ groups obtained by the procedure given in example 1. The total thickness of the double layer coating is 320 nm. The substrate is than heated to 80ºC for 1 minute so as to promote solvent evaporation, exposed to UV radiation (360 nm wavelength) with a 150 mJ/cm² dose, and heated to 180ºC for 15 minutes. The glass surface treated in this manner, with respect to its interaction with a water drop, shows a contact angle of 163º and an hysteresis angle (or flow angle) less than 3º.

### Example 3

### Formation of an ultra water-repellent and antireflective coating of the invention

A first layer of polydimethylsiloxane (PDMS) (CAS No. 9016-00-6) containing as crosslinking agent dimethyl-hydrogenmethylsiloxane (CAS No. 68037-59-2) having a thickness of 180 nm, is deposited onto a glass substrate.

A second layer is then deposited starting from a toluene solution (CAS No. 108-88-3) containing 3.1 wt% of PDMS and 3.8 wt% of silica microparticles functionalized with -Si(CH₃)₃ groups obtained by the procedure given in example 1. The total thickness of the double layer coating is 270 nm. The substrate is then heated to 80ºC for 12 hours.

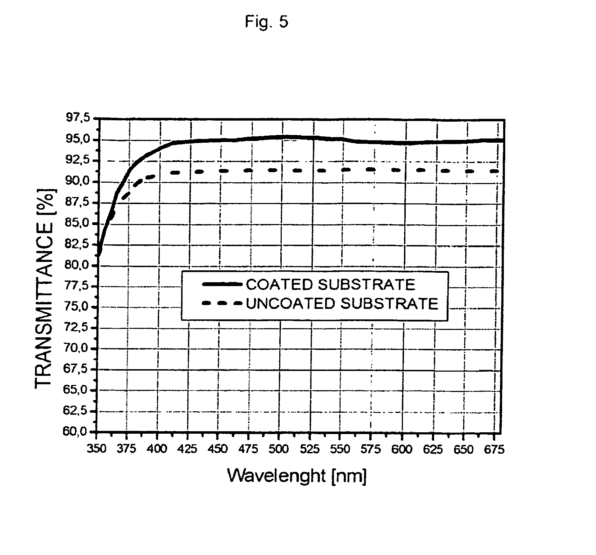

The glass surface thus treated, with respect to its interaction with a water drop, shows a contact angle of 161º and an hysteresis angle (or flow angle) less than 3º. Furthermore, the glass surface treated in this manner, for a light ray incidence angle of 30º, shows a transmittance value equal to 95% on all the visible spectrum compared with the 91% transmittance of the untreated glass substrate. The two spectra are shown in Fig 5.

### Example 4

### Formation of an ultra water-repellent coating of the invention

A first layer of Ormocomp® sol-gel resin (obtained from Micro Resist Technology) with a thickness of 430nm is deposited onto a glass substrate. A second layer is then applied starting from a solution of Ormothin® (obtained from Micro Resist Technology) containing 3.1 wt% of Ormocomp® and 5.1 wt% of silica microparticles functionalized with -Si(CH₃)₃ groups obtained by the procedure given in example 1. The total thickness of the double layer coating is 570 nm. The substrate is than heated to 80ºC for 2 minutes so as to promote solvent evaporation, exposed to UV radiation (320 nm wavelength) with a 220 mJ/cm² dose, and heated for 120 minutes at 200ºC. The glass surface treated in this manner, with respect to its interaction with a water drop, shows a contact angle of 152º and an hysteresis angle (or flow angle) less than 3º.

## Claims

1. Double layer coating comprising a lower layer of a photo/thermosetting resin adherent to the surface to be coated, and an upper layer comprising functionalized microparticles dispersed in a photo/thermosetting resin.

2. Coating according to claim 1 wherein at least a part of said microparticles of the upper layer are at least partially incorporated into the lower layer.

3. Coating according to claims 1 and 2 wherein said photo/thermosetting resin is chosen from those belonging to the following list: silicon resins, epoxy resins, polyurethane resins, organic/inorganic hybrid copolymers obtained by the sol-gel method.

4. Coating according to claim 3 wherein said photo/thermosetting resin is chosen from those belonging to the following list: polyvinylsiloxanes, polydimethylsiloxanes, polydiphenylsiloxanes, polyphenylmethylsiloxanes and polyvinylmethoxysilanes.

5. Coating according to claims 1-4 wherein said microparticles consist of silica or other metal oxides and exhibit on their surfaces functional groups of general formula -SiR₃ where each R substituent, independently of the others, is chosen from hydrogen, a linear or branched C₁-C₃₀ alkyl chain, a linear or branched C₂-C₃₀ unsaturated alkyl chain, a linear or branched halogen-substituted C₁-C₃₀ alkyl chain, a vinyl chain, a C₆-C₁₈ aromatic group, a C₃-C₃₀ epoxy-alkyl chain, a linear or branched chain of structure CₘH₂ₘX where m=1-30, and X is chosen from: CN, NR", SR", OR", O-C(O)-R", CO₂R", N-C(O)-R", where R" is chosen from: hydrogen, a linear or branched C₁-C₃₀ alkyl chain, a linear or branched C₂-C₃₀ unsaturated alkyl chain, a linear or branched halogen-substituted C₁-C₃₀ alkyl chain, a vinyl chain, a C₆-C₁₈ aromatic group, a C₃-C₃₀ epoxy-alkyl chain, a C₁-C₃₀ acyl group, an unsaturated C₃-C₃₀ acyl group, a C₆-C₁₈ aromatic group.

6. A coating according to claim 5 wherein said functionalized microparticles have a diameter comprised between 5 nm and 5µm, preferably between 5 nm and 100 nm.

7. Process for preparing the coating according to claim 1 wherein, on the surface to be treated, there are successively formed firstly a lower layer of photo/thermosetting resin and then an upper layer comprising the functionalized microparticles dispersed in a photo/thermosetting resin.

8. Process according to claim 7 wherein the same resin is used for both the lower layer and upper layer.

9. Process according to claims 7 and 8 wherein:
- onto the surface to be treated, a solution is deposited consisting of the preselected photo/thermosetting resin and a solvent in which, in addition to the resin, a suitable crosslinking agent and suitable additives are dissolved;
- onto the as yet uncured first layer, a film is deposited comprising the functionalized microparticles according to claim 5 dispersed in a highly volatile solvent together with a certain amount of the photo/thermosetting resin;
- the surface is irradiated with UV light and/or heated to a temperature comprised between 120º and 250ºC so as to initiate the crosslinking reaction of the resin polymer chain and allow evaporation of the residual solvent.

10. Process according to claim 9 wherein the quantity of resin added to the functionalized microparticle dispersion is in a weight ratio to the functionalized microparticles of between 0.1 and 10, preferably between 0.5 and 2.

11. Process according to claims 7-10 wherein the upper layer is obtained by a single deposition or by successive depositions of the same starting solution or by solutions of different compositions.

12. Process according to claim 11 wherein the layers of the coating are applied to the substrate by dip-coating, spin-coating, spray-coating or screen-printing.

13. Process according to claim 12 wherein the lower layer is deposited by dip-coating, while the upper layer is deposited by spray-coating.

14. Coating according to claims 1-6 wherein the refractive index of the constituent resin of the lower layer is comprised between 1.4 and 1.6, and in particular between 1.4 and 1.49.

15. Coating according to claims 1-6 and 14 wherein the effective refractive index of the upper layer surface is comprised between 1.25 and 1.45, and in particular between 1.25 and 1.35.

## Patentansprüche

1. Zweischichtige Beschichtung, umfassend eine untere Schicht eines photo-/hitzehärtbaren Harzes, die auf der zu beschichtenden Oberfläche haftet, und eine obere Schicht, die in einem photo-/hitzehärtbaren Harz dispergierte, funktionalisierte Mikropartikel umfasst.

2. Beschichtung gemäß Anspruch 1, wobei mindestens ein Teil der genannten Mikropartikel der oberen Schicht zumindest teilweise in die untere Schicht aufgenommen werden.

3. Beschichtung gemäß den Ansprüchen 1 und 2, wobei genanntes photo-/hitzehärtbares Harz aus denen ausgewählt wird, die der folgenden Liste angehören: Silikonharze, Epoxyharze, Polyurethanharze, organische/anorganische Hybridcopolymere, die mittels Sol-Gel-Verfahren erhalten wurden.

4. Beschichtung gemäß Anspruch 3, wobei genanntes photo-/hitzehärtbares Harz aus denen ausgewählt wird, die der folgenden Liste angehören: Polyvinylsiloxanen, Polydimethylsiloxanen, Polydiphenylsiloxanen, Polyphenylmethylsiloxanen und Polyvinylmethoxysilanen.

5. Beschichtung gemäß den Ansprüchen 1-4, wobei genannte Mikropartikel aus Siliciumdioxid oder anderen Metalloxiden bestehen und auf ihrer Oberfläche funktionelle Gruppen der allgemeinen Formel -SiR₃ aufweisen, wobei jeder R-Substituent unabhängig von den anderen aus Wasserstoff, einer linearen oder verzweigten C₁-C₃₀-Alkylkette, einer linearen oder verzweigten, ungesättigten C₂-C₃₀-Alkylkette, einer linearen oder verzweigten, halogensubstituierten C₁-C₃₀-Alkylkette, einer Vinylkette, einer aromatischen C₆-C₁₈-Gruppe, einer C₃-C₃₀-Epoxyalkylkette oder einer linearen oder verzweigten Kette der Struktur CₘH₂ₘX ausgewählt wird, in der m=1-30 ist und X aus: CN, NR", SR", OR", OC(O)-R", CO₂R", N-C(O)-R" ausgewählt wird, wobei R" ausgewählt wird aus: Wasserstoff, einer linearen oder verzweigten C₁-C₃₀-Alkylkette, einer linearen oder verzweigten, ungesättigten C₂-C₃₀-Alkylkette, einer linearen oder verzweigten, halogensubstituierten C₁-C₃₀-Alkylkette, einer Vinylkette, einer aromatischen C₆-C₁₈-Gruppe, einer C₃-C₃₀-Epoxyalkylkette, einer C₁-C₃₀-Acylgruppe, einer ungesättigten C₃-C₃₀-Acylgruppe oder einer aromatischen C₆-C₁₈-Gruppe.

6. Beschichtung gemäß Anspruch 5, wobei genannte funktionalisierte Mikropartikel einen Durchmesser im Bereich zwischen 5 nm und 5 µm, vorzugsweise zwischen 5 nm und 100 nm aufweisen.

7. Verfahren zur Herstellung einer Beschichtung gemäß Anspruch 1, wobei auf der zu behandelnden Oberfläche nacheinander zuerst eine untere Schicht eines photo-/hitzehärtbaren Harzes und dann eine obere Schicht gebildet wird, die in einem photo-/hitzehärtbaren Harz dispergierte, funktionalisierte Mikropartikel umfasst.

8. Verfahren gemäß Anspruch 7, wobei sowohl für die untere Schicht als auch für die obere Schicht das gleiche Harz eingesetzt wird.

9. Verfahren gemäß den Ansprüchen 7 und 8, wobei:
- auf der zu behandelnden Oberfläche eine Lösung abgeschieden wird, die aus dem vorgewählten photo-/hitzehärtbaren Harz und einem Lösungsmittel besteht, in dem zusätzlich zum Harz ein geeignetes Vernetzungsmittel und geeignete Zusatzstoffe gelöst sind;
- auf der bis dahin noch ungehärteten ersten Schicht ein Film abgeschieden wird, der die funktionalisierten Mikropartikel gemäß Anspruch 5, die zusammen mit einer bestimmten Menge an photo-/hitzehärtbaren Harz in einem hoch flüchtigen Lösungsmittel dispergiert sind, umfasst;
- die Oberfläche mit UV-Licht bestrahlt und/oder auf eine Temperatur zwischen 120 und 250 °C erhitzt wird, um so die Vernetzungsreaktion der Harzpolymerkette zu initiieren und das Verdampfen des restlichen Lösungsmittels zu ermöglichen.

10. Verfahren gemäß Anspruch 9, wobei die Menge an Harz, die zu der Dispersion aus funktionalisierten Mikropartikeln gegeben wird, in einem Gewichtsverhältnis zu den funktionalisierten Mikropartikeln von 0,1 und 10, vorzugsweise zwischen 0,5 und 2 steht.

11. Verfahren gemäß den Ansprüchen 7-10, wobei die obere Schicht durch eine einzelne Abscheidung oder durch aufeinander folgende Abscheidungen der gleichen Ausgangslösung oder von Lösungen mit unterschiedlichen Zusammensetzungen erhalten wird.

12. Verfahren gemäß Anspruch 11, wobei die Schichten der Beschichtung mittels Tauchbeschichten, Schleuderbeschichten, Sprühbeschichten oder Siebdruck auf das Substrat aufgebracht werden.

13. Verfahren gemäß Anspruch 12, wobei die untere Schicht mittels Tauchbeschichten aufgebracht wird, während die obere Schicht mittels Sprühbeschichten abgeschieden wird.

14. Beschichtung gemäß den Ansprüchen 1-6, wobei der Brechungsindex des Harzbestandteils der unteren Schicht zwischen 1,4 und 1,6 beträgt, und insbesondere zwischen 1,4 und 1,49.

15. Beschichtung gemäß den Ansprüchen 1-6 und 14, wobei der effektive Brechungsindex der oberen Schichtoberfläche zwischen 1,25 und 1,45, und insbesondere zwischen 1,25 und 1,35 beträgt.

## Revendications

1. Revêtement bicouche comprenant une couche inférieure d'une résine photo/thermodurcissable adhérant à la surface à revêtir, et une couche supérieure comprenant des microparticules fonctionnalisées dispersées dans une résine photo/thermodurcissable.

2. Revêtement selon la revendication 1, dans lequel au moins une partie desdites microparticules de la couche supérieure est au moins partiellement incorporée dans la couche inférieure.

3. Revêtement selon les revendications 1 et 2, dans lequel ladite résine photo/thermodurcissable est choisie parmi celles appartenant à la liste suivants :
les résines de silicium, les résines époxy, les résines de poly(uréthane), les copolymères hybrides organiques/inorganiques obtenus par la méthode sol-gel.

4. Revêtement selon la revendication 3, dans lequel ladite résine photo/thermodurcissable est choisie parmi celles appartenant à la liste suivants :
les poly(vinylsiloxanes), les poly(diméthylsiloxanes),
les poly(diphénylsiloxanes), les poly(phénylméthylsiloxanes) et les poly(vinylméthoxysilanes).

5. Revêtement selon les revendications 1 à 4, dans lequel lesdites microparticules se composent de silice ou d'autres oxydes de métal et affichent sur leurs surfaces des groupes fonctionnels de formule générale -SiR₃, où chaque substituant R, indépendamment des autres, est choisi parmi un atome d'hydrogène, une chaîne alkyle en C₁ à C₃₀ linéaire ou ramifiée, une chaîne alkyle insaturée en C₂ à C₃₀ linéaire ou ramifiée, une chaîne alkyle en C₁ à C₃₀ linéaire ou ramifiée substituée par halogène, une chaîne vinyle, un groupe aromatique en C₆ à C₁₈, une chaîne époxy-alkyle en C₃ à C₃ₒ, une chaîne linéaire ou ramifiée de structure CₘH₂ₘX où m = 1 à 30, et X est choisi parmi : CN, NR", SR", OR", O-C(O)-R", CO₂R", N-C(O)-R', où R" est choisi parmi : un atome d'hydrogène, une chaîne alkyle en C₁ à C₃₀ linéaire ou ramifiée, une chaîne alkyle insaturée linéaire ou ramifiée en C₂ à C₃₀, une chaîne alkyle en C₁ à C₃₀ linéaire ou ramifiée substituée par halogène, une chaîne vinyle, un groupe aromatique en C₆ à C₁₈, une chaîne époxy-alkyle en C₃ à C₃₀, un groupe acyle en C₁ à C₃₀, un groupe en C₃ à C₃₀ insaturé et un groupe aromatique en C₆ à C₁₈.

6. Revêtement selon la revendication 5, dans lequel les microparticules fonctionnalisées ont un diamètre compris entre 5 nm et 5 µm, de préférence entre 5 nm et 100 nm.

7. Procédé de préparation du revêtement selon la revendication 1, dans lequel, sur la surface à traiter, sont successivement formées tout d'abord une couche inférieure de résine photo/thermodurcissable, puis une couche supérieure comprenant les microparticules fonctionnalisées dispersées dans une résine photo/thermodurcissable.

8. Procédé selon la revendication 7, dans lequel la même résine est utilisée pour la couche inférieure et la couche supérieure.

9. Procédé selon les revendications 7 et 8 dans lequel :
- sur la surface à traiter, une solution est déposée se composant de la résine photo/thermodurcissable présélectionnée et d'un solvant dans lequel, en plus de la résine, un agent de réticulation approprié et des additifs appropriés sont dissous ;
- sur la première couche encore non durcie, un film est déposé comprenant les microparticules fonctionnalisées selon la revendication 5 dispersées dans un solvant hautement volatil conjointement avec une certaine quantité de la résine photo/thermodurcissable ;
- la surface est irradiée avec de la lumière UV et/ou chauffée à une température comprise entre 120 °C et 250 °C de façon à initier la réaction de réticulation de la chaîne polymère de la résine et permettre une évaporation du solvant résiduel.

10. Procédé selon la revendication 9, dans lequel la quantité de résine ajoutée à la dispersion de microparticules fonctionnalisées est dans un rapport en poids par rapport aux microparticules fonctionnalisées compris entre 0,1 et 10, de préférence entre 0,5 et 2.

11. Procédé selon les revendications 7 à 10, dans lequel la couche supérieure est obtenue par un dépôt simple ou par un dépôt successif de la même solution de départ ou par des solutions de compositions différentes.

12. Procédé selon la revendication 11, dans lequel les couches de revêtement sont appliquées au substrat par revêtement par immersion, revêtement centrifuge, revêtement par pulvérisation ou sérigraphie.

13. Procédé selon la revendication 12, dans lequel la couche inférieure est déposée par revêtement par immersion, tandis que la couche supérieure est déposée par revêtement par pulvérisation.

14. Revêtement selon les revendications 1 à 6, dans lequel l'indice de réfraction de la résine constituante de la couche inférieure est compris entre 1,4 et 1,6, en particulier entre 1,4 et 1,49.

15. Revêtement selon les revendications 1 à 6 et 14, dans lequel l'indice de réfraction effectif de la surface de couche supérieure est compris entre 1,25 et 1,45, et en particulier entre 1,25 et 1,35.
